Europäisches Patentamt

European Patent Office

Office européen des brevets

(19)

(11) Veröffentlichungsnummer : **0 325 913 B1**

# (12) EUROPÄISCHE PATENTSCHRIFT

(45) Veröffentlichungstag der Patentschrift :
**17.06.92 Patentblatt 92/25**

(51) Int. Cl.$^5$ : **B25J 15/04**, B23B 31/26

(21) Anmeldenummer : **89100059.8**

(22) Anmeldetag : **04.01.89**

(54) **Einrichtung zum Verbinden eines Werkzeugs mit einem Roboterarm.**

(30) Priorität : **26.01.88 DE 3802122**

(43) Veröffentlichungstag der Anmeldung :
**02.08.89 Patentblatt 89/31**

(45) Bekanntmachung des Hinweises auf die
Patenterteilung :
**17.06.92 Patentblatt 92/25**

(84) Benannte Vertragsstaaten :
**CH DE FR GB IT LI NL SE**

(56) Entgegenhaltungen :
**EP-A- 0 164 091**
**FR-A- 2 107 710**
**US-A- 3 229 656**
**US-A- 4 655 630**
**RESEARCH DISCLOSURE, Nr. 284, Dezember**
**1987, Seite 802, New York, US; "Tool clamping**
**system"**

(73) Patentinhaber : **Bodenseewerk Gerätetechnik**
**GmbH**
**Alte Nussdorfer Strasse 15 Postfach 1120**
**W-7770 Überlingen/Bodensee (DE)**

(72) Erfinder : **Manz, Bernhard**
**Seestrasse 5**
**W-7770 Überlingen (DE)**

(74) Vertreter : **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg (DE)**

Jouve, 18, rue Saint-Denis, 75001 PARIS

## Beschreibung

Die Erfindung betrifft einen Roboterarm und damit zu verbindendes Werkzeug, enthaltend
(a) eine an dem Roboterarm vorgesehene Vertiefung mit einer konischen Mantelfläche und
(b) ein an dem Werkzeug angebrachten Werkzeugkonus, der komplementär zu der Mantelfläche der Vertiefung ist.

## Zugrundeliegender Stand der Technik

Die FR-A-2 426 548 betrifft eine Vorrichtung zum Werkzeugwechsel bei einem Industrieroboter, bei welcher an dem drehbaren Endglied des Roboters eine topfförmige Mutter sitzt, die durch Antrieb des Endgliedes auf ein feststehendes Gewindeteil am Werkzeug aufschraubbar ist. Die Gewinde sind am Umfang mit längsverlaufenden Ausnehmungen versehen. Die Mutter kann so axial über das Gewindeteil geschoben werden, wobei die Ausnehmungen der Mutter über die stehengebliebenen Gewindeabschnitte des Gewindeteils greifen und umgekehrt. Dann wird die Mutter durch eine Verdrehung auf dem Gewindeteil festgezogen. Das Werkzeug ist auf einer elastisch gelagerten Werkzeugaufnahme angeordnet. An dem Gewindeteil sitzt ein mittiger Zentrierstift mit einem kegelstumpfförmigen Ende. Der Zentrierstift greift in einen nabenartigen Mittelteil der Mutter ein. Dieser Mittelteil weist eine zentrale Bohrung ein, die sich an ihren dem Gewindeteil zugewandten Ende trichterförmig erweitert.

Die EP-B-0 120 275 betrifft einen Werkzeugträger zum Greifen von Werkzeugen für Industrieroboter, bei welchem an dem Werkzeug ein Konus und an dem Roboterarm eine dazu komplementäre, konische Innenfläche vorgesehen sind. Das Werkzeug wird durch eine zentrale Verriegelungsvorrichtung mit dem Konus gegen die konische Innenfläche gezogen.

Die Verriegelungsvorrichtung enthält einen an dem Konus sitzenden zentralen Stift, der an seinem Ende einen doppelkonischen Kopf trägt. Ein "Schubkolbengetriebe" weist eine Hülse auf, die in einer sich an die konische Innenfläche anschließenden gestuften Axialbohrung gleitet. In Querbohrungen der Hülse sitzen Kugeln. Die Hülse ist über einen Kolben verschiebbar, der gegen die Wirkung einer Feder von einem Steuerdruck beaufschlagt ist. In einer bei Druckbeaufschlagung eingenommenen "unteren" Stellung des Kolbens können die Kugeln gegen die zurückspringende Innenfläche der Stufenbohrung ausweichen. Dann kann der Stift mit dem doppelkonischen Kopf in die Hülse eingeschoben werden und drückt dabei die Kugeln radial nach außen. Wenn der Steuerdruck abgelassen wird, geht die Hülse unter dem Einfluß der Feder zurück. Dabei werden die Kugeln von der Innenwandung im engeren Teil der Stufenbohrung radial nach innen gedrückt und verriegeln den doppelkonischen Kopf. Über die Kugeln und den Kopf wird der Konus des Werkzeugs von der Feder gegen die konische Innenfläche des Roboterarmes gezogen.

Die DE-A-32 14 025 zeigt die Verbindung zweier Teile mittels einer Kegelhülse und eines Kegelschaftes, wobei in die Kegelhülse Verriegelungsbolzen eingebaut sind, die hydraulich oder pneumatisch betätigbar sind.

## Offenbarung der Erfindung

Der Erfindung liegt die Aufgabe zugrunde, eine Werkzeug in genau definierter Winkelstellung automatisch mit einem Roboterarm so zu verbinden, daß die Verbindung ein ausreichendes Drehmoment zu übertragen vermag.

Erfindungsgemäß wird diese Aufgabe bei einer Einrichtung der eingangs definierten Art gelöst durch
(c) eine auf dem Grunde dieser Vertiefung in die Vertiefung hineinragende Gewindespindel, die durch einen roboterseitigen, programmgesteuerten Spindelmotor antreibbar ist, und
(c) eine in dem Werkzeugkonus axialbeweglich verdrehgesicherte Gewindehülse, welche unter dem Einfluß einer Feder an einem Anschlag anliegt und unter Zusammendrückung der Feder in dem Werkzeugkonus zurückschiebbar ist und in welche die Gewindespindel einschraubbar ist.

Über die konischen Flächen von Vertiefung und Werkzeugkonus zentriert sich der Roboterarm zu dem Werkzeug. Es wird dann zunächst von der Gewindespindel die Gewindehülse gegen die Wirkung der Feder zurückgedrückt. Damit ist sichergestellt, daß die Gewindehülse mit einer definierten Kraft an der Gewindespindel anliegt. Die Gewindespindel wird dann von dem entsprechend programmierten Spindelmotor angetrieben, wodurch die Gewindehülse gegen den Anschlag gezogen wird und damit dann der Roboterarm gegen das in einer Halterung in axialer Richtung fest gehaltere Werkzeug. Dabei wird die konische Mantelfläche des Werkzeugkonus in die konische Mantelfläche der Vertiefung gezogen. Dadurch wird eine Verbindung zwischen Werkzeug und Roboterarm erreicht, die auch relativ große Drehmomente um die Konusachse aufzunehmen vermag. Werkzeug und Roboterarm behalten bei diesem Anziehvorgang eine definierte relative Lage bei.

Ausgestaltungen der Erfindung sind Gegenstand der Unteransprüche.

EP 0 325 913 B1

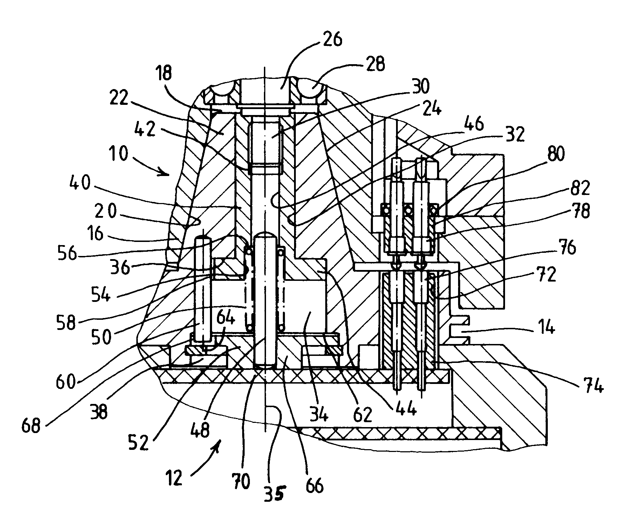

## Kurze Beschreibung der Zeichnung

Ein Ausführungsbeispiel der Erfindung ist nachstehend unter Bezugnahme auf die zugehörige Zeichnung näher erläutert, die einen Längsschnitt durch die Werkzeugaufnahme des Roboterarmes und den Werkzeugkonus des Werkzeuges zeigt.

## Bevorzugte Ausführung der Erfindung

Mit 10 ist ein Roboterarm und mit 12 ein Werkzeug bezeichnet. Das Werkzeug ist in einem (nicht dargestellten) Werkzeughalter in definierter Lage gehalten. Es ist dabei gegen axiale Bewegung (vertikal in der Figur) durch eine Zentriernut 14 gesichert, kann aber durch eine radiale Antriebskraft aus dem Werkzeughalter gelöst werden. Der Roboterarm 10 wird mit einer Werkzeugaufnahme 16 in definierter Orientierung zu dem fest gehalterten Werkzeug 12 über das Werkzeug 12 bewegt und soll in dieser Orientierung mit dem Werkzeug verbunden werden.

Zu diesem Zweck ist in der Werkzeugaufnahme 16 eine Vertiefung 18 mit einer konischen Mantelfläche 20 vorgesehen. Das Werkzeug 12 weist einen Werkzeugkonus 22 auf, dessen Mantelfläche 24 komplementär zu der konischen Mantelfläche 20 Vertiefung 18 ist.

In dem Roboterarm 10 ist gleichachsig zu der konischen Vertiefung 18 eine Gewindespindel 26 in Kugellagern 28 gelagert. Die Gewindespindel 26 weist einen mit Außengewinde versehenen Gewindekopf 30 auf. Die Gewindespindel ist von einem (nicht dargestellten) Spindelmotor antreibbar. Der Spindelmotor wird nach einem Programm des Roboters ein- und ausgeschaltet oder umgesteuert.

In dem Werkzeugkonus 22 ist eine Bohrung 32 vorgesehen. Die Bohrung 32 ist zur Konusachse 34 gleichachsig. Die Bohrung 32 erweitert sich am rückwärtigen, d.h. dem Roboterarm 10 abgewandten Ende zu einer zylindrischen Kammer 34. Zwischen der Bohrung 32 und der Kammer 34 ist eine Ringschulter 36 gebildet. An die Kammer 34 schließt sich gleichachsig zu dieser eine flache, zylindrische Ausnehmung 38 an.

In der Bohrung 32 ist eine Gewindehülse 40 axial verschiebbar geführt. Die Gewindehülse 40 weist an ihrem vorderen, d.h. dem Roboterarm 10 zugewandten Ende ein Innengewinde 42 auf. Das Innengewinde 42 korrespondiert mit dem Außengewinde des Gewindekopfes 30 der Gewindespindel 26, so daß die Gewindespindel 26 mit dem Gewindekopf 30 in das Innengewinde 42 der Gewindehülse 40 eingeschraubt werden kann. Am rückwärtigen Ende weist die Gewindehülse 40 einen Flansch 44 auf. Die Gewindehülse 40 ist am rückwärtigen Ende mit einer glatten Innenwandung versehen. In die Bohrung 46 der Gewindehülse 40 ragt ein werkzeugester Führungsstift 48. Der Führungsstift ist von einer vorgespannten Schraubenfeder 50 umgeben. Die Schraubenfeder 50 stützt sich an einer werkzeugfesten Scheibe 52 ab und liegt an der Gewindehülse 40 an. Die Gewindehülse 40 weist an ihrem rückwärtigen Ende eine Ausdrehung 54 auf, die eine Ringschulter 56 bildet. In diese Ausdrehung ragt das Ende der Schraubenfeder 50 hinein, das an der Ringschulter 56 anliegt. Durch die Schraubenfeder 50 wird im Ruhezustand der Flansch 44 in Anlagean der Ringschulter 36 gehalten, die einen Anschlag bildet.

Der Flansch 44 der Gewindehülse 40 hat am Rand einen Ausschnitt 58. In dem Werkzeugkonus 22 ist ein werkzeugfester Verdrehsicherungsstift 60 befestigt. Der Verdrehsicherungsstift 60 erstreckt sich längs der Innenwandund der Kammer 34 parallel zur Achse 34. Der Verdrehsicherungsstift 60 greift in den Ausschnitt 58 am Rande des Flansches 44 ein. Dadurch wird die Gewindehülse 40 verdrehgesichert.

Zwischen der Kammer 34 und der flachen Ausnehmung 38 ist eine Ringschulter 62 gebildet. Die Scheibe 52 ist in der Innenwandung der Ausnehmung 38 geführt und wird zwischen der Ringschulter 62 und einem Sprengring 64 gehalten. Zentral in der Scheibe 52 ist der Führungsstift 48 durch Preßsitz gehalten. Die Scheibe 52 weist zu diesem Zweck einen verdickten Mittelteil 66 auf. Am Rand weist die Scheibe 52 einen Ausschnitt 68 auf. In den Ausschnitt 68 greift der Verdrehsicherungsstift 60 ein.

Die Ausnehmung 38 ist durch eine Platine 70 abgeschlossen. Auf der Platine 70 sitzen seitlich von dem Werkzeugkonus in einer Bohrung 72 und einem Isolierkörper 74 des Werkzeugs 12 feststehende Kontakte 76. An dem Roboterarm 10 sitzen federnde Kontaktstifte 78 in einer Platine 80 und einem Isolierstück 82. Bei richtiger Verbindung des Werkzeugs 12 mit dem Roboterarm 10 sind die feststehenden Kontakte 76 und die federnden Kontaktstifte 78 fluchtend angeordnet und liegen mit gutem elektrischen Kontakt aneinander an.

Die beschriebene Anordnung arbeitet wie folgt:

Das Werkzeug 12 ist, wie oben erwähnt, in einem Werkzeughalter in fest vorgegebener Lage gehaltert. Der Roboterarm 10 wird durch entsprechende Programmierung des Roboters in vorgegebener Orientierung über das Werkzeug 12 bewegt und mit der Vertiefung 18 auf den Werkzeugkegel 22 aufgesetzt. Dabei erfolgt über die konischen Flächen 20 und 24 eine Zentrierung des Roboterarmes 10 zu dem Werkzeug 12. Die Gewindespindel 26 setzt sich mit dem Gewindekopf 30 auf das vordere (obere in der Figur) Ende der Gewindehülse 40. Bei weiterer Vorbewegung des Roboterarmes 10 (nach unten in der Figur) wird die Gewindehülse 40 mit

3

dem Flansch 44 von der Ringschulter 36 abgehoben und zurückbewegt. Dabei wird die vorgespannte Schraubenfeder 50 zusammengedrückt. Die Gewindespindel 26 liegt so mit einer definierten und begrenzten Kraft an der Gewindehülse 40 an. Es wird dann der Spindelmotor eingeschaltet. Dadurch wird der Gewindekopf 30 der Gewindespindel 26 in das Innengewinde 42 der Gewindehülse 40 eingeschraubt. Die Gewindehülse 40 ist ja durch den Verdrehsicherungsstift 60 verdrehgesichert. Das bewirkt, daß die Gewindehülse 40 wieder nach vorn, d.h. nach oben in der Figur, gezogen wird, bis der Flansch 44 wieder an der Ringschulter 36 zur Anlage kommt. Hierdurch zieht sich jetzt der Roboterarm 10 mit der konischen Mantelfläche 20 der Vertiefung 18 auf der dazu komplementär konischen Mantelfläche des Werkzeugkonus 22 fest. Diese geschieht durch eine rein geradlinige Bewegung, so daß die Orientierung des Werkzeugs 12 relativ zu dem Roboterarm 10 sich nicht ändert. Das Werkzeug 12 kann also automatisch, also ohne Eingriff des Benutzers, an dem Roboterarm 10 befestigt werden. Die Befestigung ist dabei so, daß auch relativ große Drehmomente um die Achse 34 aufgenommen werden können.

Die Befestigung in genau definierter relativer Lage gestattet es, elektrische Verbindungen zu dem Werkzeug 12 in der beschriebenen Weise über Kontakte 76 und federnde Kontakstifte 78 herzustellen.

## Patentansprüche

1. Roboterarm und damit zu verbindendes Werkzeug, enthaltend
(a) eine an dem Roboterarm (10) vorgesehene Vertiefung (18) mit einer konischen Mantelfläche (20) und
(b) einen an dem Werkzeug (12) angebrachten Werkzeugkonus (22), der komplementär zu der Mantelfläche (20) der Vertiefung (18) ist,
**gekennzeichnet durch**
(c) eine auf dem Grunde dieser Vertiefung (18) in die Vertiefung (18) hineinragende Gewindespindel (26), die durch einen roboterseitigen, programmgesteuerten Spindelmotor antreibbar ist, und
(d) eine in dem Werkzeugkonus (22) axialbeweglich verdrehgesicherte Gewindehülse (40), welche unter dem Einfluß einer Feder (50) an einem Anschlag (36) anliegt und unter Zusammendrückung der Feder (50) in dem Werkzeugkonus (22) zurückschiebbar ist und in welche die Gewindespindel (26) einschraubbar ist.
2. Einrichtung nach Anspruch 1, **dadurch gekennzeichnet, daß**, die Feder (50) eine Schraubenfeder ist, welche den Führungsstift (48) umgibt.
3. Einrichtung nach einem der Ansprüche 1 oder 2, **dadurch gekennzeichnet, daß**
(a) die Gewindehülse (40) in einer Bohrung (32) des Werkzeugkonus (22) geführt ist, die sich an ihrem rückwärtigen Ende unter Bildung einer Ringschulter (36) zu einer Kammer (34) vergrößerten Durchmessers erweitert,
(b) die Gewindehülse (40) an ihrem rückwärtigen Ende einen Flansch (44) aufweist, der an der Ringschulter (36) als dem besagten Anschlag anliegt und in der Kammer (34) beweglich ist,
(c) der Flansch (44) an seinem Rand einen Ausschnitt (58) aufweist und
(d) zur Verdrehsicherung der Gewindehülse (40) ein werkzeugfester Verdrehsicherungsstift (60) parallel zu der Achse (35) der Gewindehülse (40) längs der Innenwandung der Kammer (34) angeordnet ist und in den Ausschnitt (58) des Flansches (44) greift.
4. Einrichtung nach Anspruch 3, **dadurch gekennzeichnet, daß**
(a) die Kammer (34) sich am rückwärtigen Ende unter Bildung einer zweiten Ringschulter (62) zu einer flachen Ausnehmung (38) nochmals erweitert,
(b) in der flachen Ausnehmung (38) eine Scheibe (52) sitzt, die in der Innenwandung der Ausnehmung (38) geführt und zwischen einem Sprengring (64) und der zweiten Ringschulter (62) gehalten ist,
(c) der Führungsstift (48) zentral in der Scheibe (52) gehalten ist und
(d) die Scheibe (52) an ihrem Umfang einen Ausschnitt (68) aufweist, in welchen der Verdrehsicherungsstift (60) eingreift.
5. Einrichtung nach einem der Ansprüche 1 bis 4, dadurch gekennzeichnet, daß das Werkzeug (12) in definierter Position in einer Werkzeugaufnahme gehaltert und dabei gegen axiale Bewegung gesichert aber durch radiale Antriebskräfte lösbar ist.
6. Einrichtung nach Anspruch 5, dadurch gekennzeichnet, daß
(a) an dem Werkzeug (12) eine Platine (70) angebracht ist, auf welcher seitlich von dem Werkzeugkonus (22) feste Kontakte (76) sitzen, und
(b) an dem Roboterarm (10) federnde Kontaktstifte (78) angebracht werden, welche beim Anziehen des Roboterarmes (10) gegen das Werkzeug (12) an den festen Kontakten (76) federnd zur Anlage kommen.

**Claims**

1. A robot arm and a tool to be connected therewith, containing
(a) a recess (18) provided at the robot arm (10) and having a conical peripheral surface (20), and
(b) a tool cone (22) attached to the tool (12) and shaped complementary to the peripheral surface (20) of the recess (18),
characterised by
(c) a threaded spindle (26) extending from the bottom of this recess (18) into the recess (18) and drivable by means of a program controlled spindle motor on the side of the robot, and
(d) a threaded sleeve (40) which is axially movable in the tool cone (22) and secured against rotation and which engages a stop (36) under the action of a spring (50) and is rearwardly displaceable into the tool cone (22) under compression of the spring (50), the threaded spindle (26) being adapted to be screwed into the threaded sleeve.

2. Arrangement according to claim 1, characterised in that the spring (50) is a coil spring surrounding the guiding pin (49).

3. arrangement according to claims 1 or 2, characterised in that
(a) the threaded sleeve (40) is guided in a bore (32) of the tool cone (22), said bore being enlarged at its rear end to form a chamber (34) of increased diameter and an annular shoulder (16),
(b) the threaded sleeve (40), at its rear end, has a flange (44) engaging the annular shoulder (36) which represents said stop, and is movable in the chamber (34),
(c) the flange (44) has a cutout (58) at its rim, and
(d) a rotationally securing pin (60) securing the threaded sleeve (40) against rotation and stationary wits respect to the tool, is arranged parallel to the axis (35) of the threaded sleeve (40) along the inner wall of the chamber (34) and extends into the cutout (58) of the flange (44).

4. Arrangement according to claim 3, characterised in that
(a) the chamber (34) is further enlarged at its rear end to form a second annular shoulder (62) and a shallow recess (38),
(b) a disc (52) is seated in the shallow recess (38) and guided in the inner wall of the recess (38), said disc being held between a snap ring (64) and the second annular shoulder (62),
(c) the guiding pin (48) is centrally held in the disc (52) which comprises a cutout (68) engaged by the rotationally securing pin (60).

5. Arrangement according to any one of claims 1 to 4, characterised in that the tool (12) is retained in defined position in a tool holding fixture, said tool being secured therein against axial movement but detachable by radial driving forces.

6. Arrangement according to claim 5, characterised in that
(a) a plate (70) is attached to the tool (12), fixed contacts (76) being seated on said plate laterally of the tool cone (22), and
(b) elastic contact pins (78) are attached to the robot arm (10) and become resiliently engaged to the fixed contacts (76), when the robot arm (10) is tightened against the tool (12).

**Revendications**

1. Bras de robot et outil à relier à celui-ci, comprenant
(a) une encoche (18) d'une surface latérale conique (20), qui est prévue sur le bras de robot (10), et
(b) un cône d'outil (22) fixé sur l'outil (12) et complémentaire à la surface latérale (20) de l'encoche (18),
**caractérisé par**
(c) une broche filetée (26) s'étendant sur le fond de cette encoche (18) dans l'encoche (18) et entraînable par un moteur de broche commandé par programme du côté du robot, et
(d) un manchon fileté (40) assuré contre torsion et axialement déplacable dans le cône d'outil (22), et qui sous l'action d'un ressort (50) est appliqué contre une butée (36) et qui peut être reculé dans le cône d'outil (22) en compressant le ressort (50), et dans lequel peut être vissé la broche filetée (26).

2. Dispositif selon la revendicaiton 1, **caractérisé par le fait que** le ressort (50) est un ressort cylindrique entourant la goupille de guidage (48).

3. Dispositif selon l'une des revendications 1 ou 2, **caractérisé par le fait que**
(a) le manchon fileté (40) est guidé dans un alésage (32) du cône d'outil (22), qui s'élargit à son extrémité arrière à une chambre (34) d'un diamètre élargie en formant un épaulement annulaire (36),
(b) le manchon fileté (40) présente à son extrémité arrière une flasque (44) appliquée contre l'épaulement annulaire (36) comme ladite butée, et qui est mobile dans la chambre (34),

(c) la flasque (44) présente à son bord une section (58), et

(d) afin d'assurer le manchon fileté (40) contre torsion, une goupille de sécurité de torsion (60) fixe par rapport à l'outil est disposée parallèlement à l'axe (35) du manchon fileté (40) le long de la paroie intérieure de la chambre (34), et s'étendant dans la section (58) de la flasque (44).

4. Dispositif selon la revendication 3, **caractérisé par le fait que**

(a) la chambre (34) s'élargit encore une fois à son extrémité arrière vers un creux plat (38) en formant un second épaulement annulaire (62),

(b) dans le creux plat (38) est situé un disque (52) guidé dans la paroi intérieure du creux (38) et tenu entre un jonc (64) et le second épaulement annulaire (62),

(c) la goupille de guidage (48) est tenue centralement dans le disque (68), et

(d) le disque (52) présente à sa circonférence une découpure (68), dans lequel s'engrène la goupille de sécurtié de torsion (60).

5. Dispositif selon l'une des revendications 1 à 4, **caractérisé par le fait que** l'outil (12) est tenu en position définie dans une réception d'outil et assuré contre des déplacements axiaux mais détachable par des forces d'entraînement radiales.

6. Dispositif selon la revendication 5, **caractérisé par le fait que**

(a) une platine (70) sur laquelle des contacts fixes (76) sont situés latéralement du cône d'outil (22), est fixée sur l'outil (12), et

(b) des goupilles de contact élastiques (78) sont fixées au bras de robot (10), qui sont appliquées élastiquement contre les contacts fixes (76) lorsque le bras de robot (10) est serré contre l'outil (12).